# EUROPEAN PATENT APPLICATION

(11) **EP 1 498 971 A2**
(43) Date of publication of application: **19.01.2005**
(21) Application number: 04016255.4
(22) Date of filing: 09.07.2004
(51) Int. Cl.: H01M 8/04, H01M 8/02, H01M 8/24

(54) **Cooling of air-cooled fuel cell system**

(30) Priority: 14.07.2003 CN 03146035
(71) Applicant: Asia Pacific Fuel Cell Technologies, Ltd., Chunan, Miaoli 350 (TW)
(72) Inventor: Ys Yang, Jefferson, CA 92869 (US); Pen-Mu Kao, Mike, Anaheim CA 92807 (US); Bo, Aili, Anaheim CA 92807 (US); Hsiao, Feng-Hsiang, Taipei Taiwan 110, R.O.C. (CN)
(74) Representative: Goddar, Heinz J., Dr.

(57) **Abstract**

An air cooling system for cooling an air-cooled fuel cell system including a plurality of cooling air channels formed in the fuel cell system is disclosed. The fuel cell system is provided with a fan casing at a cooling air inlet side of the cooling air channels. At least one fan is mounted to an opening of the fan casing. When the fan is turned on, it generates a cooling air flow which flows in from the cooling air inlets, through the cooling air channels and flows out from the cooling air outlets. A temperature sensor is arranged at a position between an anode plate of a single cell unit and a cathode plate of an adjacent single cell unit for detecting a temperature of the fuel cell system. A filter casing is provided to fuel cell system at the cooling air inlet side, and a filter is mounted to an opening of the filter casing for filtering dust and impurities. A cooling air guiding cover is provided at an external side of the fan casing for guiding the cooling air to a humidifier. The humidified cooling air is recirculated via a recirculation pipeline to the fuel cell system.

Each cooling air channel could be formed with a funnel shape enlarged structure at both ends.

## Description

### 1. Field of the Invention

The present invention relates generally to a cooling device for fuel cell system, and in particularly to a cooling system for cooling an air-cooled fuel cell stack including a plurality of cooling air channels formed therein.

### 2. Description of the Prior Art

A fuel cell is a power-generating unit that generates electrical energy through electrochemical reaction of hydrogen and oxygen. The fuel cell has the advantages of high energy conversion efficiency, clean exhaust gas, low noise, and non-use of conventional fuels, as compared with a conventional internal combustion engine. In the past few years, it has been highly promoted and developed worldwide. Among these known fuel cells, the proton exchange membrane fuel cell (PEMFC) is the best-developed technique, having the advantages of low operation temperature, fast start-up and high power density. As a whole, PEMFC has high value for industry.

Generally, a fuel cell system should be maintained at an appropriate operation temperature and humidity for optimal performance. Besides anode gas channels and cathode gas channels, a fuel cell system is usually provided with coolant channels, such that the heat generated in operation of the fuel cell system is removed by the coolant flowing therethrough and the fuel cell is maintained at a proper temperature. There are two major cooling techniques conventionally employed in fuel cell system, the liquid cooling system and the air cooling system. Comparatively, the liquid cooling system has better cooling effect, but it has to be used with other components that makes the fuel cell system more complicated in structure. It is not suitable to use the liquid cooling system in a low power fuel cell system which is small in size and simple in structure. Therefore, air cooling system is usually employed in the low power fuel cell system.

### SUMMARY OF THE INVENTION

Thus, an object of the present invention is to provide an air cooling system for fuel cell system, such that heat generated in operation of the fuel cell system is removed by the cooling air and the fuel cell system is maintained at a proper temperature.

Another object of the present invention is to provide a cooling system with a simple structure for an air-cooled fuel cell system. By means of a cooling air generating device, such as a fan or a blower, the fuel cell system comprising simple cooling channels can be effectively cooled.

A further object of the present invention is to provide an air cooling system for fuel cell system, capable of recirculating the cooling air to the fuel cell stack. The air cooling system comprises at least one fan, a fan casing and a guiding lid. With the arrangements, the cooling air generated by the fan is recirculated to the humidifer for humidification, and then conveyed to the cathode gas inlet of the fuel cell stack for reaction.

To achieve the above objects, in accordance with the present invention, there is provided an air cooling system for air-cooled fuel cell system including a plurality of cooling air channels. The fuel cell system is provided with a fan casing at a cooling air inlet side of the cooling air channels. At least one fan is mounted to an opening of the fan casing. When the fan is turned on, it generates a cooling air flow which flows in from the cooling air inlets, through the cooling air channels and flows out from the cooling air outlets. A temperature sensor is arranged at a position between an anode plate of a single cell unit and a cathode plate of an adjacent single cell unit for detecting a temperature of the fuel cell system. Preferably, a filter casing is provided to fuel cell system at the cooling air inlet side, and a filter is mounted to an opening of the filter casing for filtering dust and impurities. A cooling air guiding cover may be further provided at an external side of the fan casing for guiding the cooling air to a humidifier. The humidified cooling air is recirculated via a recirculation pipeline to the fuel cell system.

### BRIEF DESCRIPTION OF THE DRAWINGS

The present invention will be apparent to those skilled in the art by reading the following description of preferred embodiments thereof, with reference to the attached drawings, in which:

**Fig. 1** is a perspective view of an air-cooled fuel cell system with an air cooling system constructed in accordance with a first embodiment of the present invention;

**Fig. 2** is an exploded view of the fuel cell system of **Fig. 1;**

**Fig. 3** is a cross-sectional view showing the components of the fuel cell stack;

**Fig. 4** is a schematic side view showing the components of the fuel cell stack in assembled status;

**Fig. 5** is an enlarged view of the encircled portion **A** of **Fig. 4;**

**Fig. 6** is a cross-sectional view taken along line **6-6** of **Fig. 1**;

**Fig. 7** is a schematic plan view showing the cooling air channels of the fuel cell stack;

**Fig. 8** is a cross-sectional view of a second embodiment of the present invention;

**Fig. 9** is a cross-sectional view of a third embodiment of the present invention;

**Fig. 10** is a cross-sectional view of a fourth embodiment of the present invention; and

**Fig. 11** is a cross-sectional view of a fifth embodiment of the present invention.

### DETAILED DESCRIPTION OF THE PREFERRED EMBODIMENTS

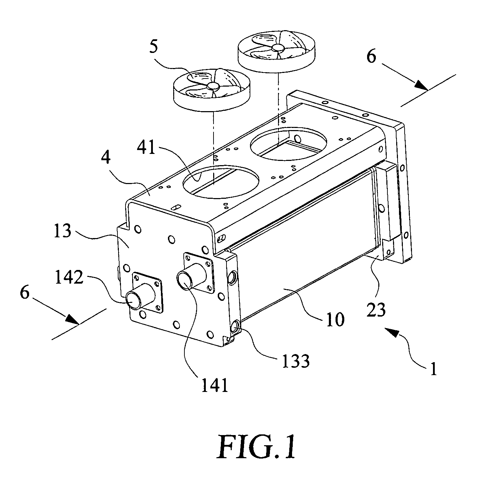

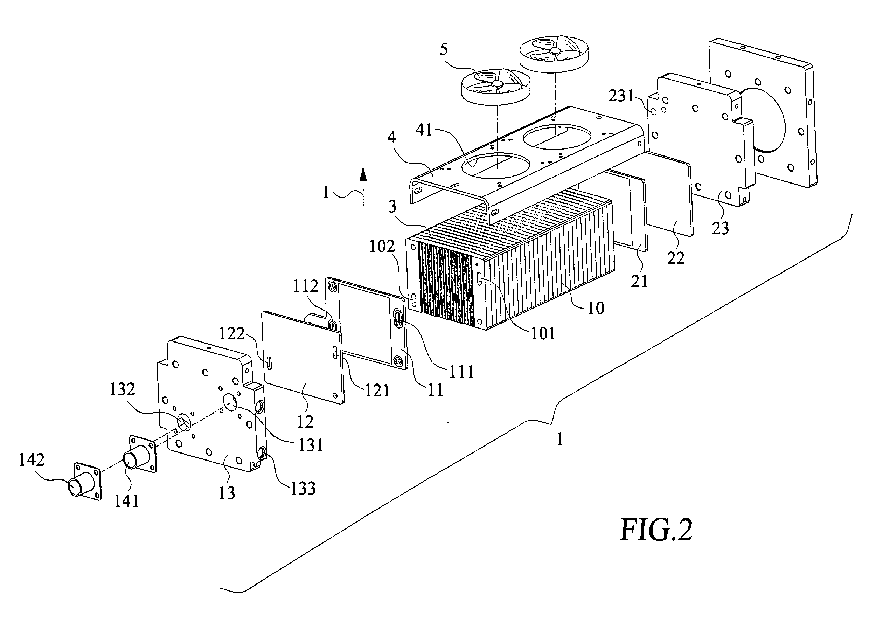

With reference to the drawings and in particular to **Figs. 1** and **2**, **Fig. 1** is a perspective view of a fuel cell system with an air cooling system in accordance with the present invention and **Fig. 2** is an exploded view of the fuel cell system of **Fig. 1.**

As shown, the fuel cell system **1** comprises a fuel cell stack **10**. The fuel cell stack **10** is provided with an anode collector **11**, an anode insulator **12** and an anode endplate **13** at an anode side of the fuel cell stack **10**, and a cathode collector **21**, a cathode insulator **22** and a cathode endplate **23** at a cathode side of the fuel cell stack **10**.

The anode endplate **13** is formed with a cathode gas inlet **131** and a cathode gas outlet **132**. Cathode gas (air) is conveyed to the cathode gas inlet **131** of the anode endplate **13**, through a cathode gas inlet **121** of the anode insulator **12** and a cathode gas inlet **111** of the anode collector **11** to a cathode gas inlet **101** of the fuel cell stack **10** in sequence. The cathode gas proceeds electrochemical reaction in the fuel cell stack **10** and then flows out from a cathode gas outlet **102** of the fuel cell stack **10**. Then, the cathode gas is conveyed through a cathode gas outlet **112** of the anode collector **11** and a cathode gas outlet **122** of the anode insulator **12** to a cathode gas outlet **132** of the anode endplate **13** in sequence. The cathode gas inlet **131** and cathode gas outlet **132** of the anode endplate **13** may be further respectively connected with a cathode gas inlet connector **141** and a cathode gas outlet connector **142**.

Similarly, the cathode endplate **23** is formed with an anode gas inlet **231.** Anode gas is conveyed from the anode gas inlet **231** to the fuel cell stack **10** for proceeding electrochemical reaction. Then, the anode gas flows out from an anode gas outlet **133** of the anode endplate **13**.

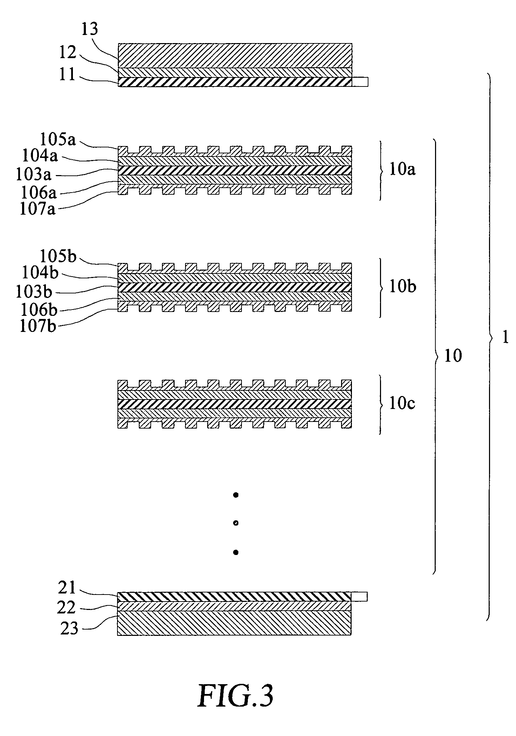

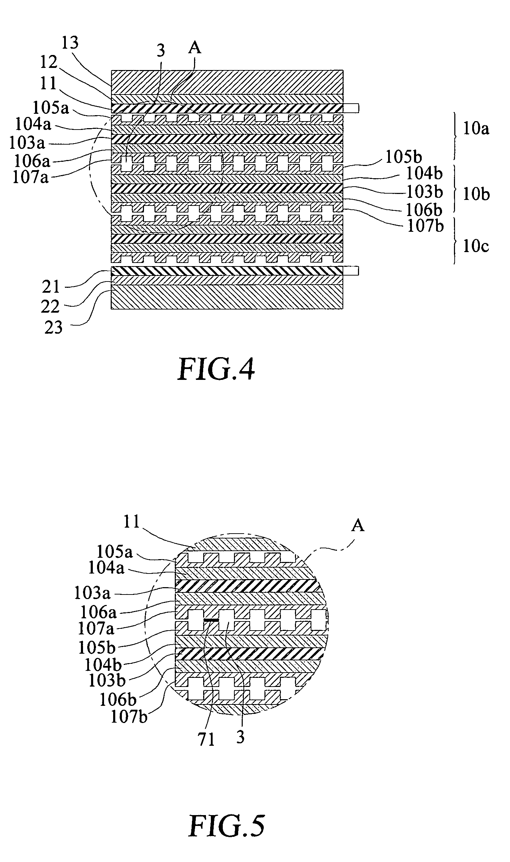

Please refer to **Figs. 3** and **4**. **Fig. 3** is a cross-sectional view showing the components of the fuel cell system **1**. **Fig. 4** shows the components of the fuel cell system **1** of **Fig. 3** in assembled status. The fuel cell system **1** comprises a fuel cell stack **10** which includes a plurality of single cell units **10a**, **10b, 10c**, and so on.

The single cell unit **10a** includes a membrane electrode assembly (MEA) **103a** which comprises a proton exchange membrane, an anode catalyst layer coated on an anode side of the proton exchange membrane, and a cathode catalyst layer coated on a cathode side of the proton exchange membrane. On an anode side of the membrane electrode assembly **103a,** there is arranged an anode gas diffusion layer **104a** and an anode flow field plate **105a,** while on a cathode side of the membrane electrode assembly **103a**, there is arranged a cathode gas diffusion layer **106a** and a cathode flow field plate **107a**.

Similarly, the single cell unit **10b** includes a membrane electrode assembly (MEA) **103b** which comprises a proton exchange membrane, an anode catalyst layer coated on an anode side of the proton exchange membrane, and a cathode catalyst layer coated on a cathode side of the proton exchange membrane. On an anode side of the membrane electrode assembly **103b**, there is arranged an anode gas diffusion layer **104b** and an anode flow field plate **105b**, while on a cathode side of the membrane electrode assembly **103b,** there is arranged a cathode gas diffusion layer **106b** and a cathode flow field plate **107b**.

A plurality of cooling air channels **3** are formed between adjacent single cells for cooling air flowing therethrough, whereby the fuel cell stack **10** is properly cooled. As shown in **Fig. 5** which is an enlarged view of the encircled portion **A** of **Fig. 4,** the cathode plate **107a** of the single cell unit **10a** and the anode plate **105b** of the single cell unit **10b** are respectively formed with a corrugated structure defining a plurality of channels bottom surface thereon. The top surface of the cathode plate **107a** is used as a cathode flow field plate and the bottom surface is used as a coolant plate. The top surface of the anode plate 107b is used as an anode flow field plate. When the cathode plate **107a** of the single cell unit **10a** is stacked precisely on the anode plate **105b** of the single cell unit **10b**, the channels of the cathode plate **107a** is located oppositely and correspondingly to the channels of the anode plate **105b,** and form a plurality of cooling air channels between the cathode plate **107a** and the anode plate **105b.**

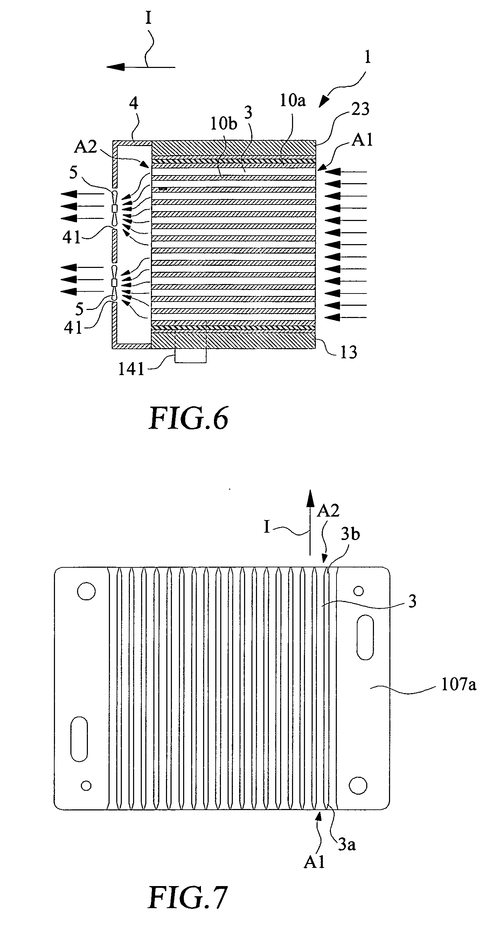

Please also refer to **Fig. 6,** which is a cross-sectional view of the fuel cell system **1** in accordance with a first embodiment of the present invention. A fan casing **4** is mounted at a position close to the side of the air outlets **A2** of the cooling air channels **3** formed in the fuel cell stack **10** of the fuel cell system **1**. Two openings **41** are formed on the fan casing **4**. Each of the openings **41** is mounted with a cooling air generating device, such as a fan **5** or a blower. When the fans **5** are turned on, they generate a cooling air flow in the cooling air channels **3** in a direction **I**. The cooling air travels from the cooling air inlet **A1** into the cooling air channels **3** of the fuel cell stack **10** and comes out from the cooling air outlet **A2**. The cooling air removes heat and appropriately cools down the fuel cell stack **10**.

Please refer to **Fig. 7** which is a schematic plan view of the cooling air channels of the fuel cell stack. In order to generate a good cooling air flow, the cooling air inlet **A1** is formed with a funnel shape enlarged structure **3a** and the cooling air outlet **A2** is also formed with a funnel shape enlarged structure **3b.**

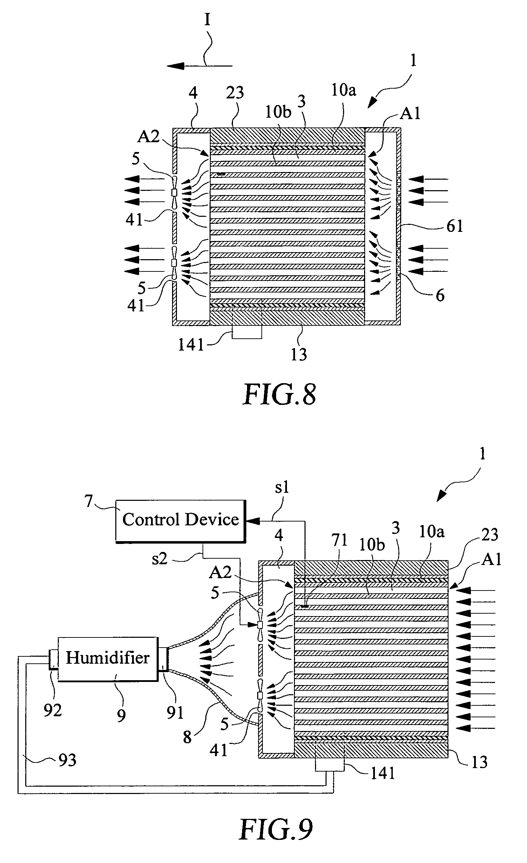

**Fig. 8** shows a second embodiment of the air cooling system of the present invention. In this embodiment, the fuel cell system **1** further comprises a filter casing **61** and a filter **6** mounted to the openings of the filter casing **61**. The filter casing **61** is arranged at a position close to the side of the cooling air inlet **A1** of the cooling air channels **3** of the fuel cell stack **10.** With the arrangement, the cooling air flows through the filter **6** before flowing into the cooling channels 3 and is filtered to remove dust and impurities.

Please refer to **Fig. 9** which is a cross-sectional view of a third embodiment of the present invention. As shown, the air cooling system is incorporated to the fuel cell system with a control device. The control device **7** may comprise a simple temperature controller. A temperature sensor **71** is provided in the fuel cell stack **10**. The temperature sensor **71** may be provided at an appropriate position of the fuel cell stack **10**, such as a position between two adjacent single cells. As shown in **Fig. 5,** the temperature sensor **71** is arranged at a position between the cathode plate **107a** of the fuel cell unit **10a** and the anode plate **105b** of the fuel cell unit **10b.** By means of the temperature sensor **71,** the operation temperature of the fuel cell system **1** is detected.

Of course, the temperature sensor **71** may be disposed to any appropriate position for detecting the temperature of the fuel cell system **1**. For example, the temperature sensor **71** may be mounted to a position close to the membrane electrode assembly of the fuel cell stack **10** for detecting the operation temperature of the fuel cell system **1.**

The temperature sensor **71** detects the operation temperature of the fuel cell system **1** and generates and transmits a temperature signal **s1** to the control device **7.** Upon the receipt of the temperature signal **s1,** in accordance with the temperature detected, the control device **7** generates a fan speed control signal **s2** to the fan **5,** such that the speed of the fan **5** is regulated in correspondence to the temperature signal **s1.**

Furthermore, an external side of the casing **4** of the fuel cell stack **10** is provided with a cooling air guiding cover **8**. An outlet of the cooling air guiding cover **8** is connected to a gas inlet **91** of a humidifier **9.** Since the cooling air drawn out by the fan **5** has a moderate temperature of, for example 55∼65°C, when the cooling air flows to the gas inlet **91** of the humidifier **9** via the cooling air guiding cover **8**, the relative humidity of the cooling air is increased. Accordingly, the cooling air has moderate temperature and relative humidity. The cooling air is conveyed from a gas outlet **92** of the humidifier **9** via a recirculation pipeline **93** and the cathode gas inlet connector **141** to the fuel cell stack **10**.

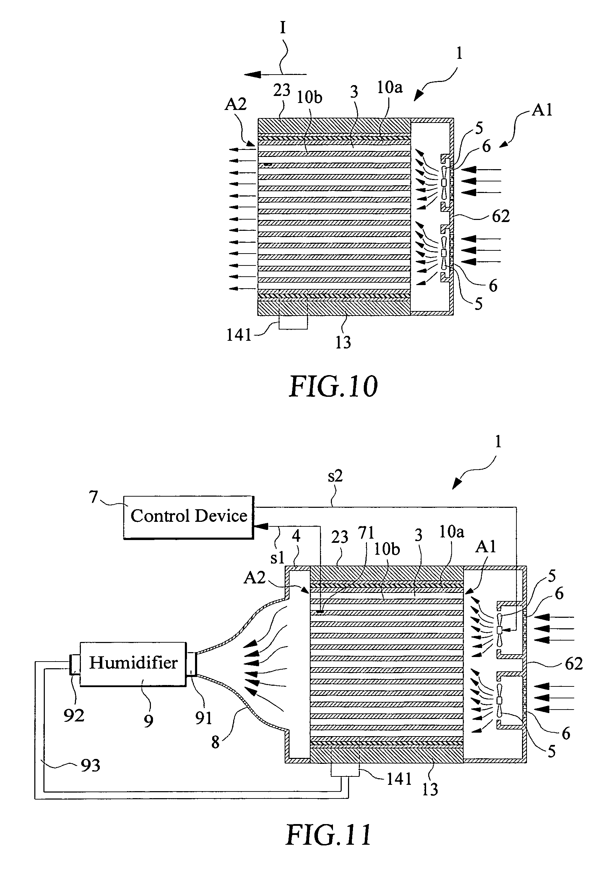

Fig. **10** is a cross-sectional view of a fourth embodiment of the present invention. The fourth embodiment is substantially similar to the first and second embodiments respectively shown in **Figs. 6** and **8**. The fourth embodiment is different from the first and second embodiments in that at least one cooling air generating device, such as a fans **5** or a blower, is provided at a casing **62** which is mounted at a position close to the side of the air inlets **A1** of the cooling air channels **3.** When the fans **5** are turned on, they generate a cooling air flow to the cooling air channels **3** along a direction **I**. The cooling air travels from the cooling air inlet **A1** into the cooling air channels **3** of the fuel cell stack **10** and comes out from the cooling air outlet **A2.** Thereby, the fuel cell stack **10** is appropriately cooled. Preferably, the casing **62** further comprises a filter 6 at each of the positions where the fans **5** are located to remove dust and impurities from the inlet air.

Referring to **Fig. 11**, a fifth embodiment of the present invention is shown. The fifth embodiment is substantially similar to the third embodiment shown in **Fig. 9**. The fifth embodiment is different from the third embodiment in that the fans **5** are provided at a casing **62** which is mounted at a position close to the side of the air inlets **A1** of the cooling air channels **3.** When the fans **5** are turned on, they generate a cooling air flow to the cooling air channels **3** along a direction **I**. The cooling air travels from the cooling air inlet **A1** into the cooling air channels **3** of the fuel cell stack **10** and comes out from the cooling air outlet **A2**. Thereby, the fuel cell stack **10** is appropriately cooled.

Furthermore, an external side of the casing **4** of the fuel cell stack **10** is provided with a cooling air guiding cover **8**. An outlet of the cooling air guiding cover **8** is connected to a gas inlet **91** of a humidifier **9**. Since the cooling air flown out from the cooling air outlet **A2** has a moderate temperature, when the cooling air flows to the gas inlet **91** of the humidifier **9** via the cooling air guiding cover **8**, the relative humidity of the cooling air is increased. Accordingly, the cooling air has moderate temperature and relative humidity. The cooling air is conveyed from a gas outlet **92** of the humidifier **9** via a recirculation pipeline **93** and the cathode gas inlet connector **141** to the fuel cell stack **10**. Thereby, the fuel cell stack **10** is appropriately cooled, while the reactant air to the fuel cell stack is humidified to a moderate humidity. Preferably, the casing **62** further comprises a filter **6** at each of the positions where the fans **5** are located to remove dust and impurities from the inlet air.

From the above-described preferred embodiment, it is apparent that by applying an air cooling system, the fuel cell system is properly cooled. Moreover, the cooling air is conveyed to the humidifier via the guiding lid for humidifying. As a result, heat is efficiently recovered, and the performance of the fuel cell system is promoted. The present invention is novel and practical in use.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A cooling system for cooling a fuel cell stack comprising a plurality of single cell units, comprising:
a plurality of cooling air channels formed between adjacent single cell units of the fuel cell stack, each cooling channel having a cooling air inlet arranged at one side of the fuel cell stack and a cooling air outlet arranged at an opposing side of the fuel cell stack;
a fan casing with at least one opening, which is mounted to the fuel cell stack; and
at least one cooling air generating device mounted to the opening of the fan casing, such that when the cooling air generating device is turned on, a cooling air flow flows in from the air cooling inlets, through the cooling air channels and comes out from the air cooling outlets.

2. The cooling system as claimed in Claim 1, wherein each single cell unit comprises a cathode flow field plate and an anode flow field plate, both of the flow field plates being formed with a plurality of channels, and when the cathode flow field plate of one single cell unit is located oppositely and correspondingly to the anode flow field plate of an adjacent single cell unit, the channels of the cathode flow field plate and the anode flow field plate form a plurality of the cooling air channels therebetween.

3. The air cooling system as claimed in Claim 2, further comprising a temperature sensor arranged at a position between the anode flow field plate of one single cell unit and the cathode flow field plate of an adjacent single cell unit for detecting a temperature of the fuel cell system.

4. The air cooling system as claimed in Claim 1, wherein each cooling air channel is formed with a funnel shape enlarged structure at the cooling air inlet and the cooling air outlet respectively.

5. The air cooling system as claimed in Claim 1, wherein the fuel cell system further comprises a filter casing provided at the cooling air inlet side and a filter mounted to an opening of the filter casing.

6. The air cooling system as claimed in Claim 1, wherein the fuel cell system is further provided with a cooling air guiding cover mounted on the fan casing for guiding the cooling air coming out from the air cooling outlets.

7. The air cooling system as claimed in Claim 6, wherein the cooling air guiding cover is connected with a gas inlet of a humidifier which humidifies the cooling air coming out from the air cooling outlets and conveys the cooling air to the fuel cell system via a recirculation pipeline.
